# EUROPEAN PATENT APPLICATION

(11) **EP 1 909 420 A1**
(43) Date of publication of application: **09.04.2008**
(21) Application number: 06767316.0
(22) Date of filing: 26.06.2006
(51) Int. Cl.: H04J 3/00

(54) **APPARATUS FOR MODIFYING PART OF PREDETERMINED PACKET**

(30) Priority: 30.06.2005 JP 2005192543
(71) Applicant: Leader Electronics Corp., Yokohama-shi, Kanagawa 223-8505 (JP)
(72) Inventor: TATSUMI, Hiroaki Leader Electronics Corp., Yokohama-shi, Kanagawa 223-8505 (JP)
(74) Representative: Hartz, Nikolai
(86) International application number: PCT/JP2006/312699
(87) International publication number: WO 2007/004453

(57) **Abstract**

An apparatus for modifying part of a predetermined packet comprises means (31) for receiving a TS and determining whether or not each TS packet is a predetermined packet, means (32) for delaying the TS, means (33) for modifying part of the predetermined packet, and means (34) for receiving a delayed TS and a modified predetermined packet and selectively outputting the delayed TS packet and the modified predetermined packet. The third means (33) overwrites an ID described in a predetermined or a similar item (for example, Number) on a predetermined ID or a similar item (for example, Number).

## Description

### TECHNICAL FIELD

The present invention relates to an apparatus for modifying part of a predetermined packet included in a TS (transport stream), and more particularly, to an apparatus for modifying an ID described in a predetermined packet (for example, TSID, ServiceID, RemoteControlKeyID) or a similar one (for example, MajorChannelNumber, LogicalChannelNumber) to a desired ID or a similar one (for example, Number).

### BACKGROUND ART

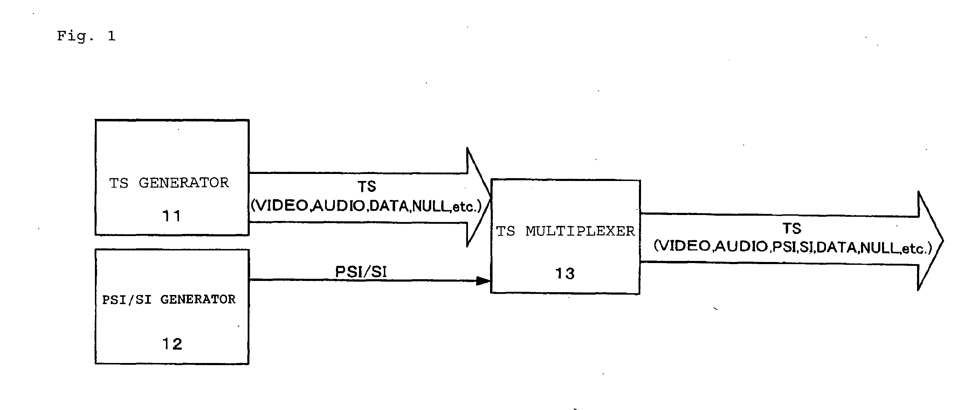

Fig. 1 is a diagram for generally describing a conventional system for generating PSI/SI information and multiplexing the same with a TS. As illustrated in Fig. 1, the conventional system comprises a TS generator 11, a PSI/SI generator 12, and a TS multiplexer 13. The TS generator 11 generally multiplexes a video ES (elementary stream) with an audio ES to generate a multiplexed TS. The PSI/SI generator 12 generates PSI (Program Specification Information) information and SI (Service Information) information. The TS multiplexer 13 generally multiplexes the multiplexed TS with the PSI information and SI information to generate a multiplexed TS.

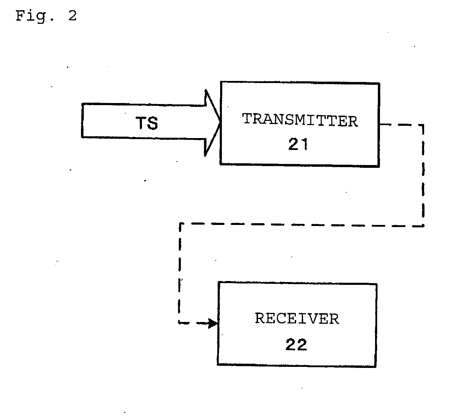

Fig. 2 is a diagram for generally describing a system for transmitting a TS and receiving a transmitted TS. As illustrated in Fig. 2, this system comprises a transmitter 21 and a receiver 22. The transmitter 21 performs a channel encoding of a TS (for example, output from the system illustrated in Fig. 1) to generate a transmission signal. The receiver 22 receives, demodulates and decodes a transmission signal.

It should be understood by those skilled in the art that the background art described herein may differ slightly from one country to another.
Non-Patent Document 1: Astro Design Inc., "SP-5000" (Description on Product), Internet <URL http://www.astrodesign.co.jp/shop/goods/goods.asp?goods=000000 0000110>
Non-Patent Document 2: Astro Design Inc., "CX5503A" (Description on Product), Internet <URL http://www.astrodesign.co.jp/shop/goods/goods.asp?goods=000000 000000013>
Non-Patent Document 3: Astro Design Inc., "SP5002" (Description on Product), Internet <URL http://www.astrodesign.co.jp/shop/goods/goods.asp?goods=000000 000000112>

### DISCLOSURE OF THE INVENTION

### PROBLEMS TO BE SOLVED BY THE INVENTION

When the system illustrated in Fig. 2 conforms to the digital terrestrial broadcasting scheme of Japan (ISDB-T), channel setting is generally performed before the receiver 22 decodes (reproduces) a transmission signal. Specifically, the receiver 22 searches for receivable transmission signals, demodulates a receivable transmission signal, extracts an NIT (Network,Information Table) packet included in a TS, and stores information described in the NIT packet (TSID, ServiceID, and RemoteControlKeyID are included). Subsequently, as a remote controller of the receiver 22 sets a reception channel, the receiver 22 decodes a TS which has a TSID and a ServiceID which correspond to a RemoteControlKeyID that match the reception channel.

Accordingly, for allowing the receiver 22, in which a channel has been already set, to receive a TS having the same contents (the same video TS and audio TS) on a different reception channel, it is necessary to modify the RemoteControlKeyID, TSID, and ServiceID described in the NIT packet. Further, when part of the NIT packet is modified, it is also necessary to modify part of a PAT packet and a PMT packet in order to maintain the consistency.

In order to allow the receiver 22 to receive a TS having the same contents on a different reception channel in this way, part of PSI packets (NIT packet, PAT packet, and PMT packet) may be modified. However, the PSI/SI generator 12 shown in Fig. 1 is implemented, for example, by a software application "SP-5000" (see Non-Patent Document 1) available from Astro Design Inc., and the PSI/SI generator 12 generates the PSI information and SI information even if parameters related to the reception channel are modified. As a result, the TS multiplexer 13 shown in Fig. 1 is required to multiplex a multiplexed TS with the PSI information and SI information.
For executing this multiplexing in real time, the TS multiplexer 13 is implemented, for example, by a hardware device "CX5503A'' (see Non-Patent Document 2) available from Astro Design Inc., and is expensive as a consequence.

On the other hand, the TS multiplexer 13, which also comprises functions of the PSI/SI generator 12 shown in Fig. 1, is implemented, for example, by a software application "SP-5002" (see Non-Patent Document 3) from Astro Design Inc., and can be reasonable as compared with hardware. However, a long time is required to multiplex the multiplexed TS with the PSI information and SI information, so that the multiplexing cannot be performed in real time.

In this regard, a first object of allowing the receiver 22 to receive a TS having the same contents on a different reception channel is to test the receiver 22. Also, a second object is to broadcast the TS having the same contents between different areas (for example, broad Kanto area and broad Kinki area).

In addition, when no NIT packet is included in a TS input to the receiver 22 shown in Fig. 2, the receiver 22 cannot receive the TS. Also, when a TS input to the receiver 22 shown in Fig. 2 includes an NIT packet (NIT'packet for BS (satellite) broadcasting or NIT packet for digital terrestrial broadcasting in another country) which cannot be received by the receiver 22, the receiver 22 cannot either receive the TS. Accordingly, when an NIT packet is added to a TS, or when an NIT packet is modified, the TS multiplexer 13 shown in Fig. 1 must multiplex a multiplexed TS with PSI information and SI information.

In this regard, when the system illustrated in Fig. 2 conforms to the digital terrestrial broadcasting scheme (ATSC) of the United States, the NIT packet corresponds to a VCT (Virtual Channel Table) packet, and RemoteControlKeyID corresponds to MajorChannelNumber. In the digital terrestrial broadcasting scheme of the United States, even without modifying MajorChannelNumber, TSID, and ProgramNumber described in the VCT packet, the receiver 22, in which a channel has been already set, can receive a TS having the same contents on a different channel, but can be required to modify MajorChannelNumber.

On the other hand, the digital terrestrial broadcasting scheme (DVB-T) of the Europe is similar to the digital terrestrial broadcasting scheme of Japan, and employs one similar to RemoteControlKeyID (for example, LogicalChannelNumber (which is employed in England, Austria and the like)).

It is an object of the present invention to provide an apparatus for modifying part of a predetermined packet included in a TS.

It is another object of the present invention to provide an apparatus which is capable of processing a TS at a low cost and in real time.

Other objects of the present invention will become apparent to those skilled in the art with reference to embodiments described below and the accompanying drawings.

### MEANS FOR SOLVING THE PROBLEMS

An apparatus of the present invention comprises means (31) for receiving a TS (transport stream) and determining whether or not each TS packet is a predetermined packet, means (32) for delaying the TS, means (33) for modifying part of the predetermined packet, and means (34) for selectively outputting the delayed TS packet and the modified predetermined packet.

The third means (33) may overwrite an ID or a similar item (for example, Number) described in the predetermined packet on a predetermined ID or a similar item (for example, Number).

The predetermined packet may include a PAT packet, a PMT packet, and an NIT packet (or one similar to the NIT packet (for example, a VCT packet)).

The predetermined packet may include a PAT packet, a PMT packet, and a Null packet applicable to a position at which an NIT packet (or one similar to the NIT packet (for example, a VCT packet)) should be inserted.

The predetermined packet may include a PAT packet and a PMT packet, and may not include an NIT packet (or one similar to the NIT packet (for example, a VCT packet)).

The apparatus of the present invention may further comprise means (61, 41) for analyzing descriptions of a PAT packet, wherein the predetermined packet includes the PAT packet, the first means (31) determines whether or not a PID of each TS packet is a PID of the PAT packet, and the means (61, 41) for analyzing descriptions of a PAT packet analyzes the descriptions of the PAT packet to retrieve the PID of the PMT packet.

The first means (31) may determine whether or not the PID of each TS packet is a PID of the PMT packet.

The first means (31) may determine whether or not the PID of each TS packet is a PID of the PMT packet, and the means (61, 41) for analyzing descriptions of a PAT packet may analyze the descriptions of the PAT packet to determine whether or not there are descriptions related to an NIT packet.

The first means (31) may determine whether or not the PID of each TS packet is a PID of the NIT packet for a predetermined time period.

The predetermined packet may include a NULL packet when there is no NIT packet, and the first means (31) may determine whether or not the PID of each TS packet is a PID of the NULL packet.

The apparatus of the present invention may further comprise means (201, 41) for analyzing descriptions of an MGT packet, wherein the predetermined packet may include the MGT packet, the first means (31) may determine whether or not the PID of each TS packet is a PID of the MGT packet, and the means (201, 41) for analyzing descriptions of an MGT packet may analyze the descriptions of the MGT packet to determine whether or not there are descriptions related to a VCT packet.

The predetermined packet may include a VCT packet, and the first means (31) may determine whether or not the PID of each TS packet is a PID of the VCT packet for a predetermined time period.

The predetermined packet may include a NULL packet when there is no VCT packet, and the first means (31) may determine whether or not the PID of each TS packet is a PID of the NULL packet.

The apparatus of the present invention may further comprise means (85) for storing RemoteControlKeyID for rewriting or a similar item (for example, MajorChannelNumber, LogicalChannelNumber), wherein the first means (33) may overwrite RemoteControlKeyID or a similar item (for example, MajorChannelNumber) described in the predetermined packet on the stored RemoteControlKeyID for rewriting or similar item (for example, MajorChannelNumber, LogicalChannelNumber).

The apparatus of the present invention may further comprise means (85) for storing TSID, ServiceID, and RemoteControlKeyID for rewriting (or one similar to RemoteControlKeyID (for example, MajorChannelNumber, LogicalChannelNumber)), wherein the third means (33) may overwrite TSID, ServiceID, and RemoteControlKeyID (or one similar to RemoteControlKeyID (for example, MajorChannelNumber, LogicalChannelNumber)) described in the predetermined packet on the stored TSID, ServiceID, and RemoteControlKeyID (or one similar to RemoteControlKeyID (for example, MajorChannelNumber, LogicalChannelNumber)) for rewriting.

The apparatus of the present invention may further comprise means (85) for storing an NIT packet for rewriting, wherein the first means (31) may determine whether or not each TS packet is pertinent to one of the PAT packet, PMT packet, and Null packet applicable to a position at which the NIT packet is inserted, and when the first means (31) determines that each TS packet is pertinent to the Null packet applicable to a position at which a NIT packet is inserted, the fourth means (34) may output the stored NIT packet for rewriting as a modified predetermined packet.

The apparatus of the present invention may further comprise means (85) for storing a VCT packet for rewriting, wherein the first means (31) may determine whether or not each TS packet is pertinent to one of the PAT packet, PMT packet, and Null packet applicable to a position at which a VCT packet should be inserted, and when the first means (31) determines that each TS packet is pertinent to the Null packet applicable to a position at which a VCT packet should be inserted, the fourth means (34) may output the stored VCT packet for rewriting as a modified predetermined packet.

The storing means (85) may further store an MGT packet for rewriting, the first means (31) may determine whether or not each TS packet is pertinent to one of the PAT packet, PMT packet, null packet applicable to a position at which a VCT packet should be inserted, and Null packet applicable to a position at which a MGT packet should be inserted, and when the first means (31) determines that each TS packet is pertinent to the null packet applicable to a position at which a VCT packet should be inserted, the fourth means (34) may output the stored MGT packet for rewriting as a modified predetermined packet.

The apparatus of the present invention may further comprise means (85) for storing an NIT packet (or one similar to the NIT packet (for example, a VCT packet) for rewriting, wherein the first means (31) may determine whether or not each TS packet is pertinent to one of the PAT packet, PMT packet, and NIT packet (or one similar to the NIT packet (for example, the VCT packet), and when the first means (31) determines that each TS packet is pertinent to the NIT packet (or the one similar to the NIT packet (for example, the VCT packet), the fourth means (34) may output the stored NIT packet (or the one similar to the NIT packet (for example, the VCT packet) as a modified predetermined packet.

The first means (31) may determine whether or not each TS packet is pertinent to one of the PAT packet and PMT packet, a predetermined packet selectively output by the fourth means (34) may include a modified PAT packet and PAT packet from the third means (33), and a TS selectively output by the fourth means (34) may include a delayed NIT packet (or one similar to the NIT packet (for example, the VCT packet) from the second means (32).

The apparatus of the present invention may further comprise means (42) for generating a timing signal for sending the NIT packet, and means (85) for storing an NIT packet for rewriting, wherein the first means (31) may detect a NULL packet using the timing signal as a trigger, and the fourth means (34) may output the stored NIT packet for rewriting as a modified predetermined packet.

The apparatus of the present invention may further comprise means (42) for generating a timing signal for sending the VCT packet, and means (85) for storing a VCT packet for rewriting, wherein the first means (31) may detect a NULL packet using the timing signal as a trigger, and the fourth means (34) may output the stored VCT packet for rewriting as a modified predetermined packet.

The apparatus of the present invention may further comprise means (42) for generating a second timing signal for sending the MGT packet, wherein the storing means (85) may further store an MGT packet for rewriting, the first means (31) may detect a second NULL packet using the second timing signal as a trigger, and the fourth means (34) may output the stored MGT packet for rewriting as a modified predetermined packet.

An apparatus of the present invention comprises means (151) for receiving a TS and determining whether or not each TS packet is a predetermined packet, means (33) for modifying part of the predetermined packet, and means (152) for selectively outputting a non-predetermined packet which is not modified and the modified predetermined packet.

### EFFECTS OF THE INVENTION

According to the present invention, a new TS can be created by utilizing a TS for testing comprising a predetermined packet (for example, a PSI packet), and modifying part of the predetermined packet. Also, even if a TS cannot be received by a receiver, the receiver can readily generate a receivable TS. Other advantages of the present invention will become apparent to those skilled in the art with reference to the embodiments described below and accompanying drawings and in consideration of circumference of countries other than Japan.

### BRIEF DESCRIPTION OF THE DRAWINGS

[Fig. 1]
   Fig. 1 is a diagram for generally describing a conventional system for generating PSI/SI information and multiplexing the same with a TS.
[Fig. 2]
   Fig. 2 is a diagram for generally describing a system for transmitting a TS and receiving a transmitted TS.
[Fig. 3]

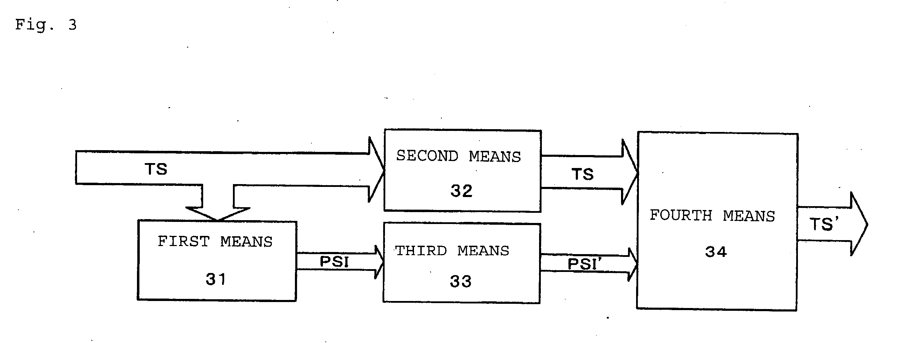

   Fig. 3 is a block diagram generally illustrating an apparatus for modifying part of a PSI packet in accordance with the present invention.
[Fig. 4]

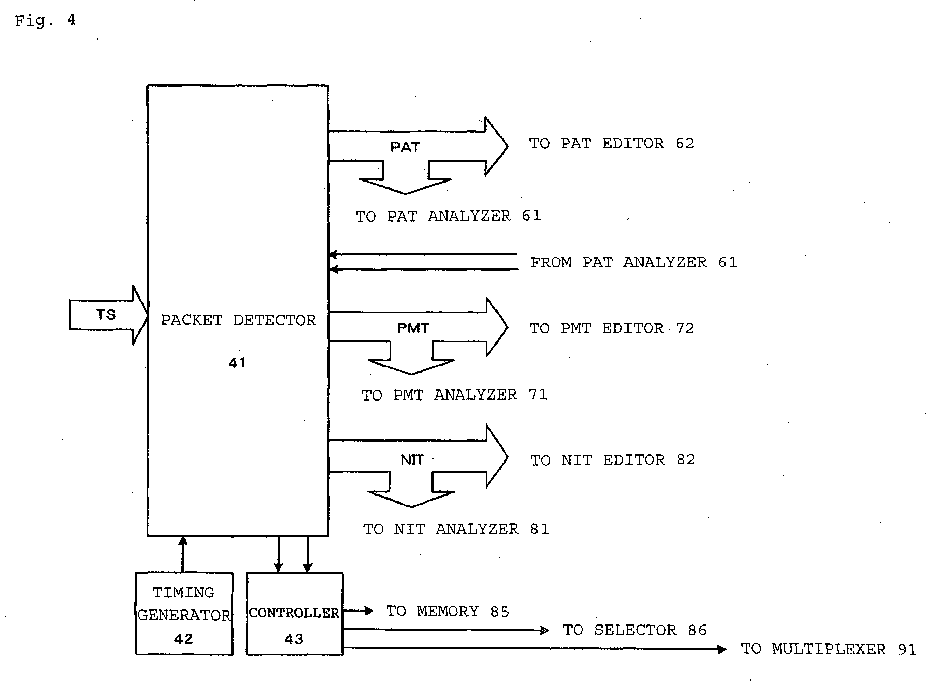

   Fig. 4 illustrates a detailed block diagram of first means shown in Fig. 3.
[Fig. 5]

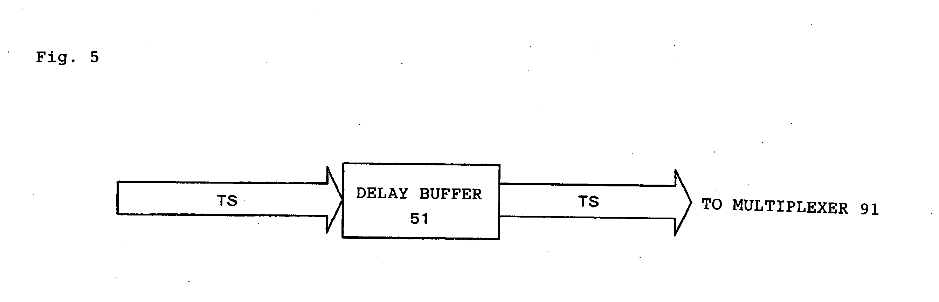

   Fig. 5 illustrates a detailed block diagram of second means shown in Fig. 3.
[Fig. 6]

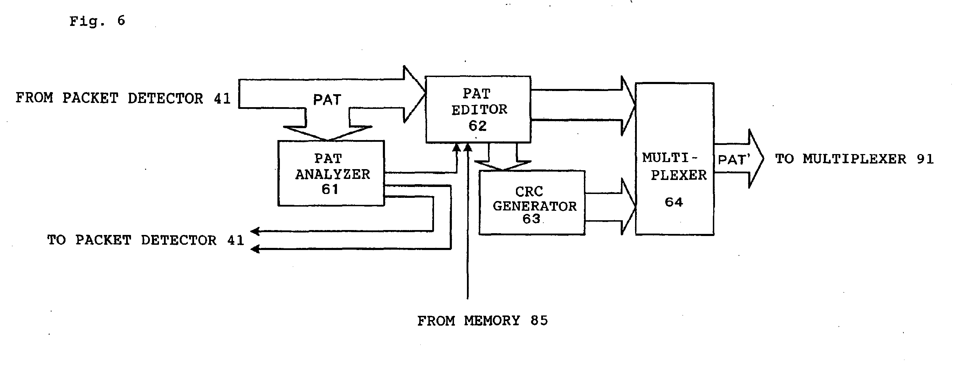

   Fig. 6 illustrates a detailed block diagram of third means shown in Fig. 3.
[Fig. 7]

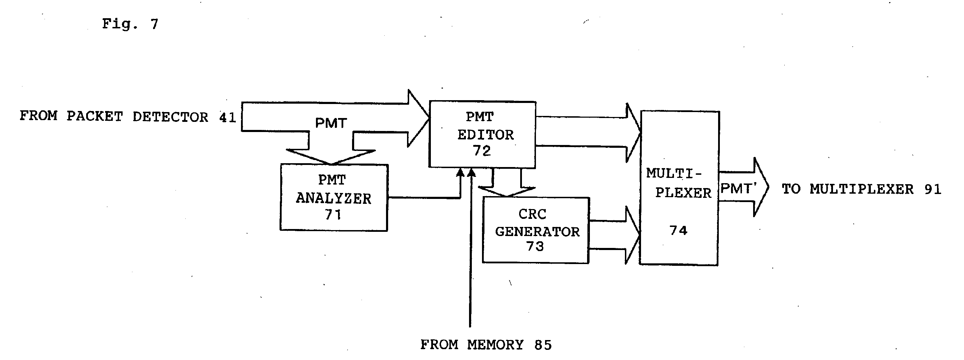

   Fig. 7 illustrates a detailed block diagram of the third means shown in Fig. 3.
[Fig. 8]

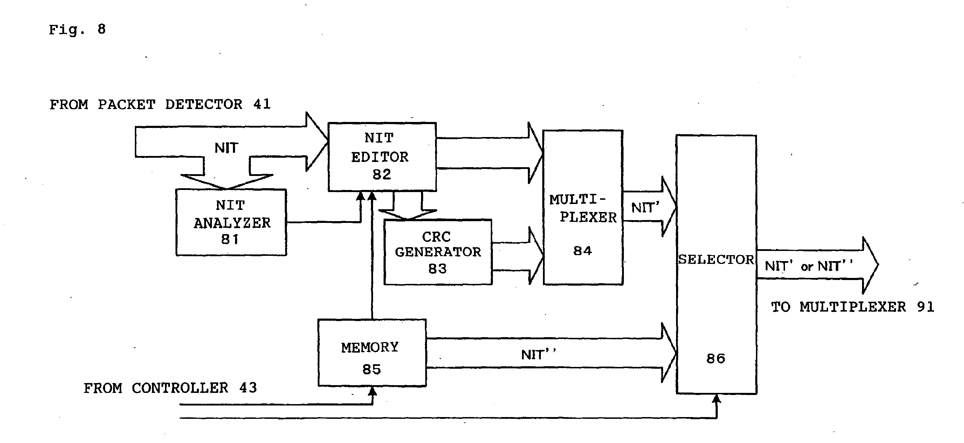

   Fig. 8 illustrates a detailed block diagram of the third means shown in Fig. 3.
[Fig. 9]

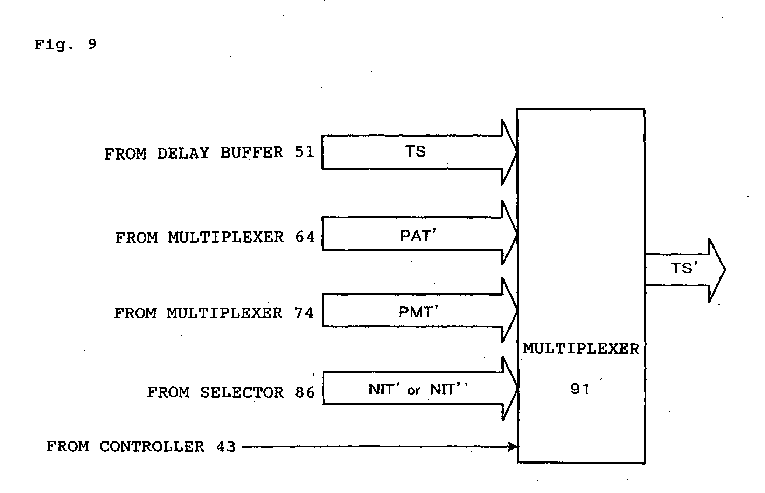

   Fig. 9 illustrates a detailed block diagram of fourth means shown in Fig. 3.
[Fig. 10]

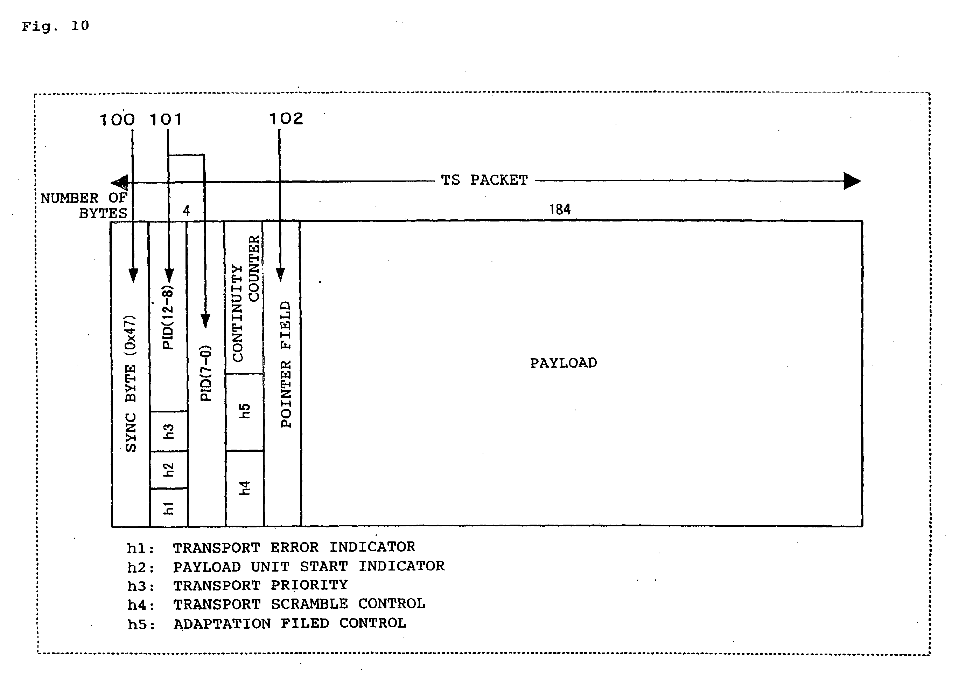

   Fig. 10 is a diagram for describing exemplary descriptions of a TS packet.
[Fig. 11A]

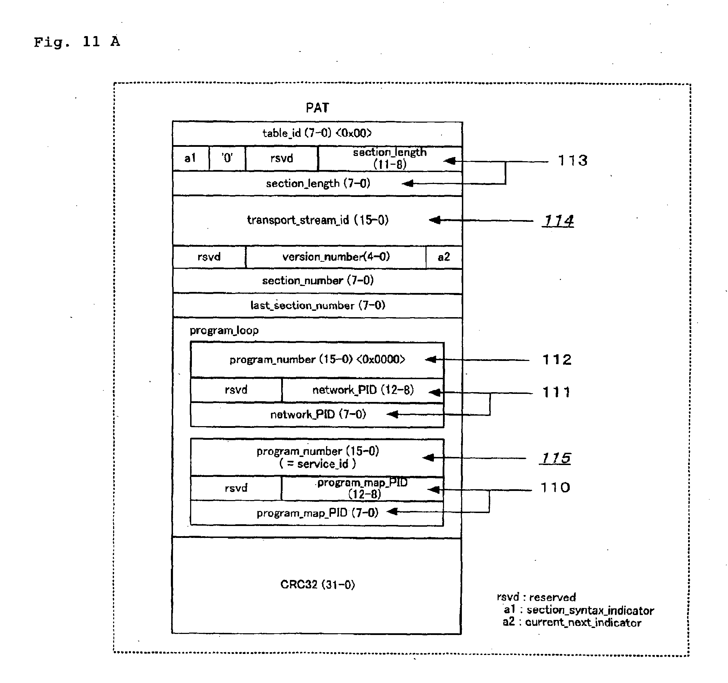

   Fig. 11A is a diagram for describing exemplary descriptions of a PAT packet.
[Fig. 11B]

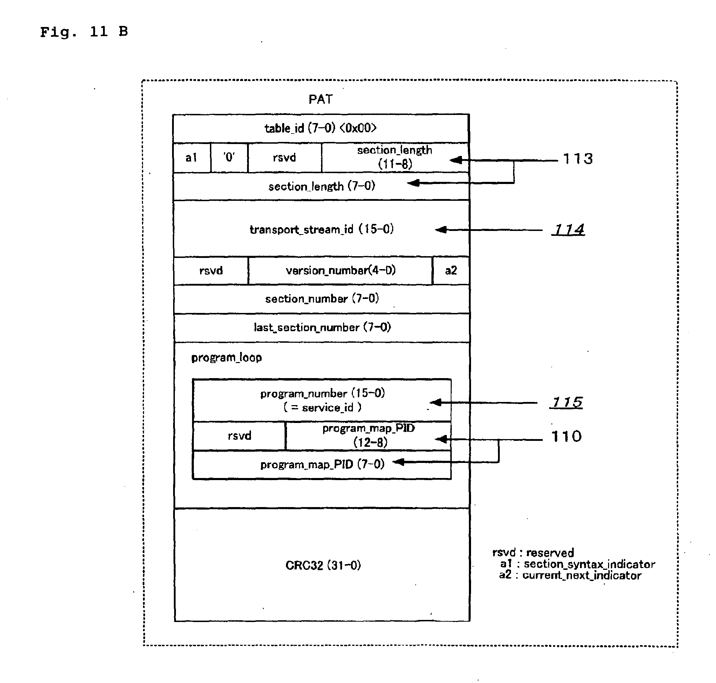

   Fig. 11B is a diagram for describing exemplary descriptions of a PAT packet which does not have descriptions related to an NIT packet.
[Fig. 12]

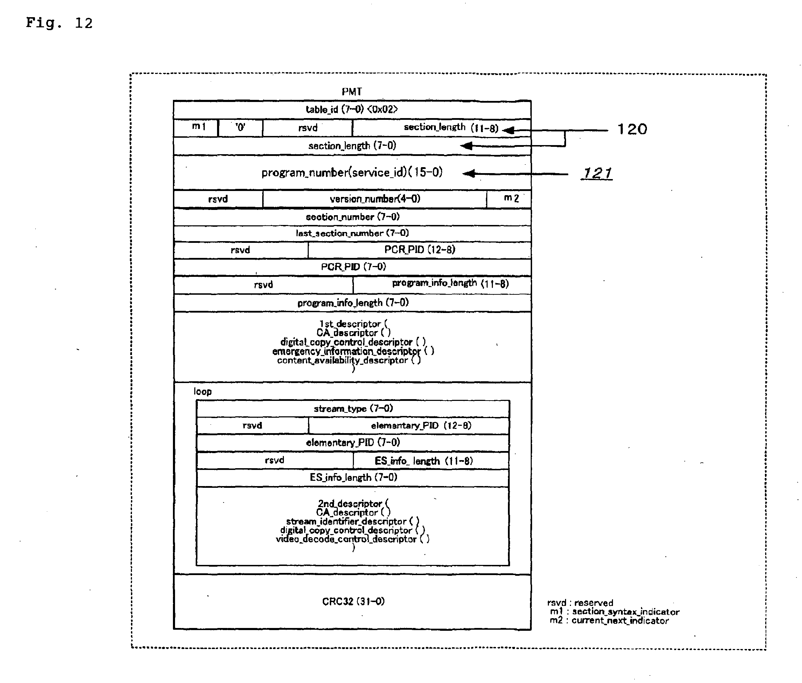

   Fig. 12 is a diagram for describing exemplary descriptions of a PMT packet.
[Fig. 13A]

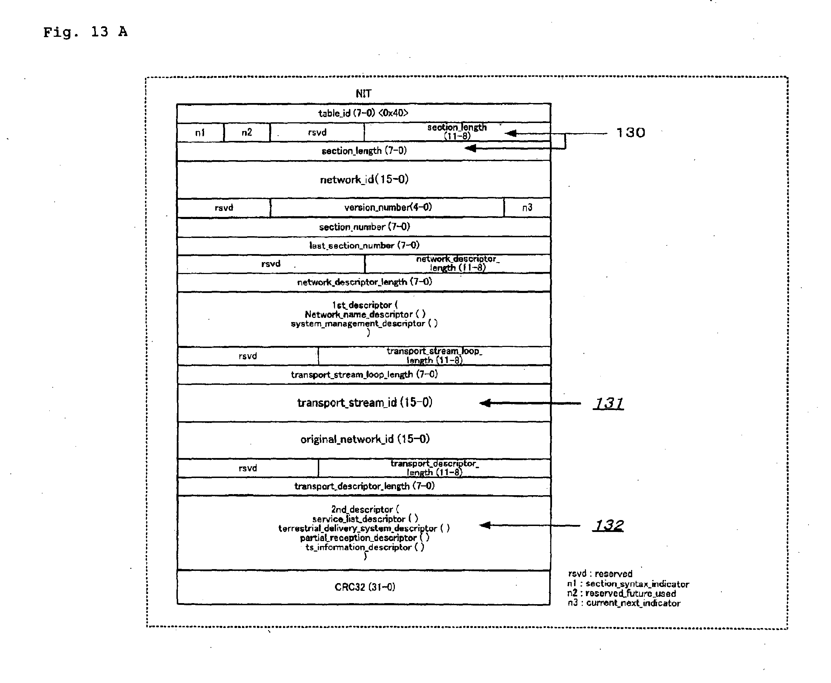

   Fig. 13A is a diagram for describing exemplary descriptions of an NIT packet.
[Fig. 13B]

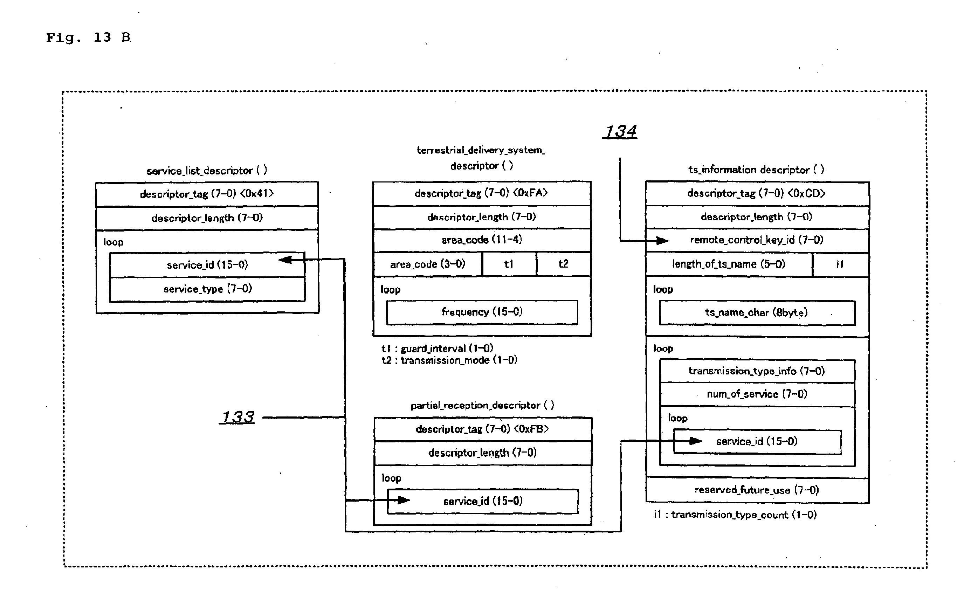

   Fig. 13B is a diagram for describing exemplary detailed descriptions of a portion indicated by an arrow 132 in Fig. 13A.
[Fig. 14]

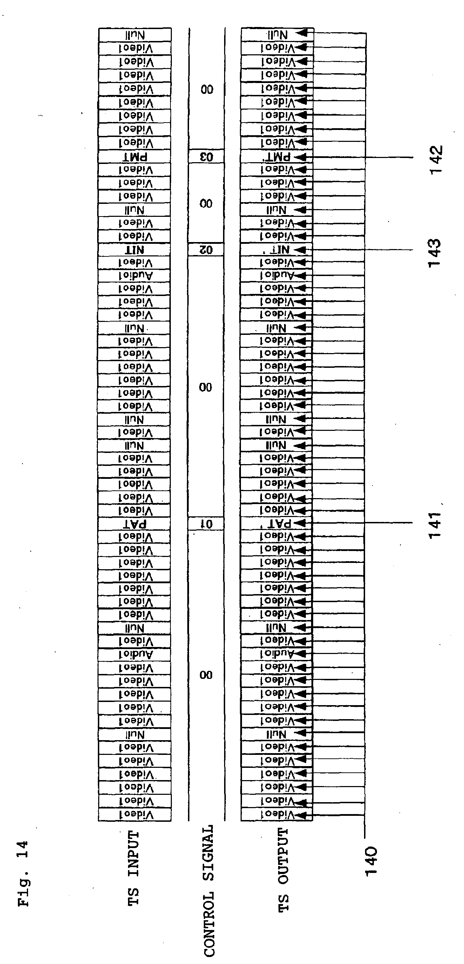

   Fig. 14 is a diagram for describing a TS in which part of a PSI packet has been modified by the apparatus of the present invention.
[Fig. 15]

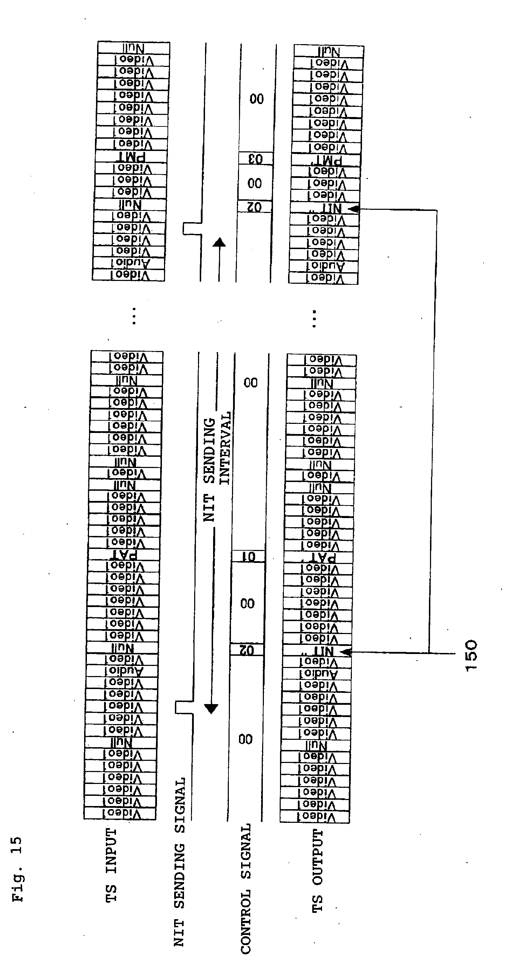

   Fig. 15 is a diagram for describing a TS in which part of a PSI packet has been modified by the apparatus of the present invention.
[Fig. 16]

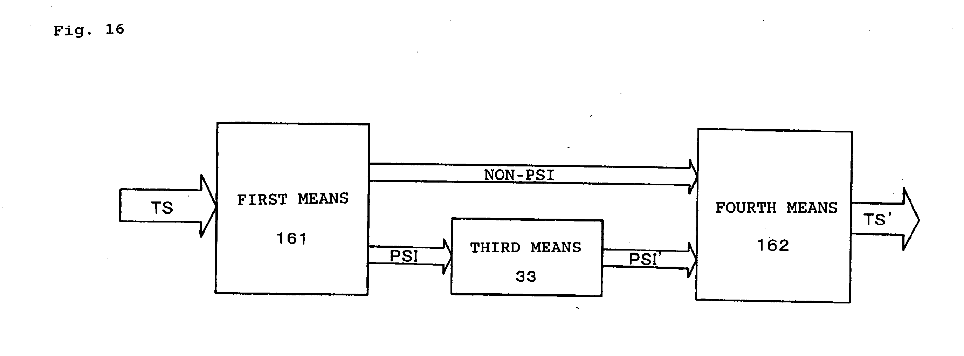

   Fig. 16 is a block diagram generally illustrating an apparatus for modifying part of a PSI packet in accordance with the present invention.
[Fig. 17A]

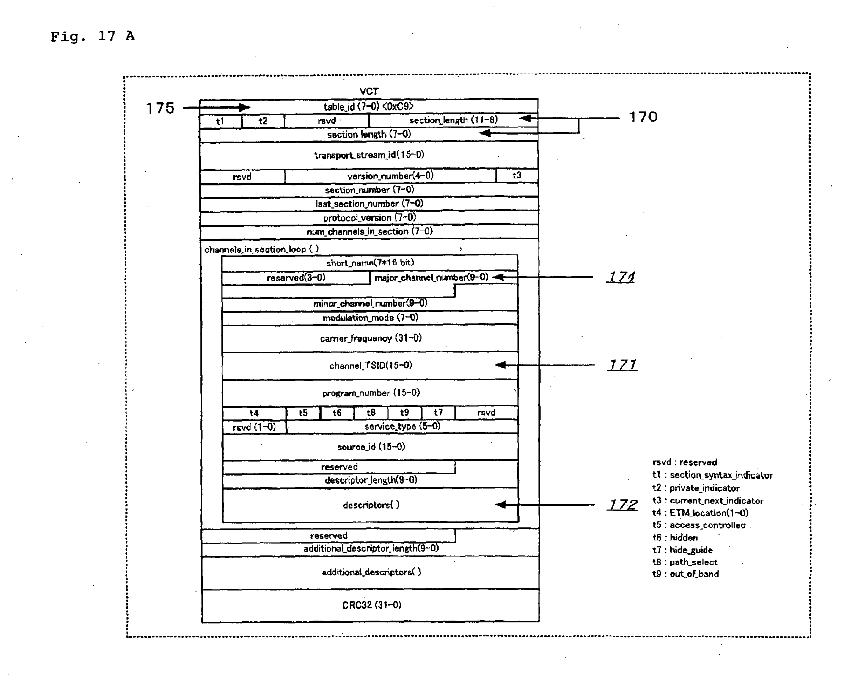

   Fig. 17A is a diagram for describing exemplary descriptions of a VCT packet.
[Fig. 17B].

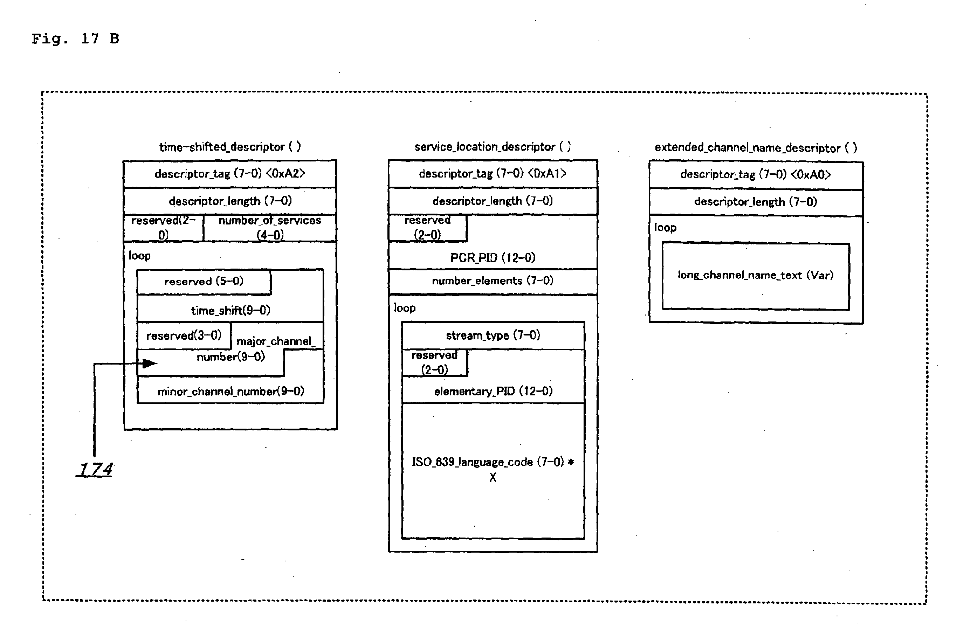

   Fig. 17B is a diagram for describing exemplary detailed descriptions of a portion indicated by an arrow 172 in Fig. 17A.
[Fig. 18]

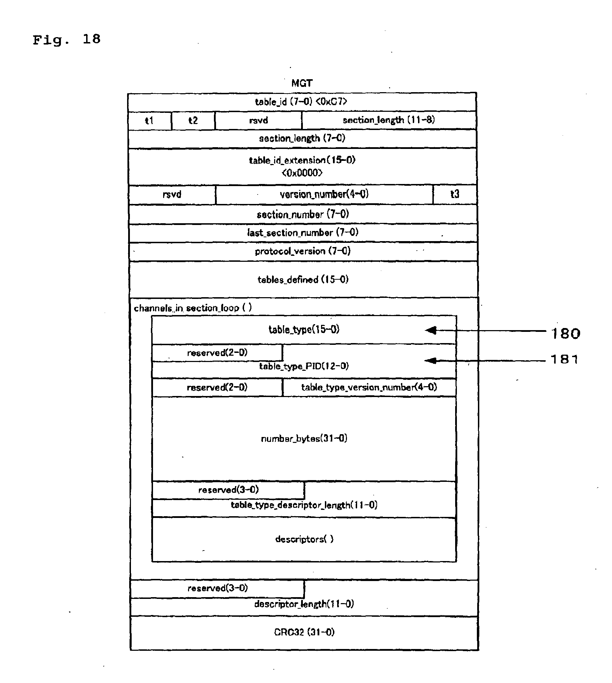

   Fig. 18 is a diagram for describing exemplary descriptions of an MGT packet.
[Fig. 19]

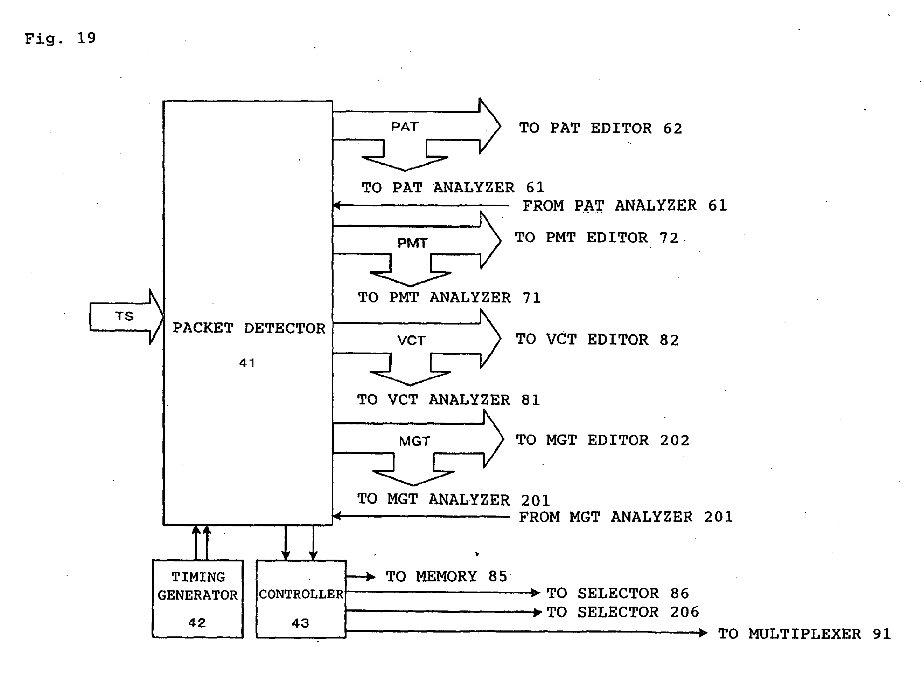

   Fig. 19 is a diagram illustrating the flow of an MGT packet, added to Fig. 4.
[Fig. 20]

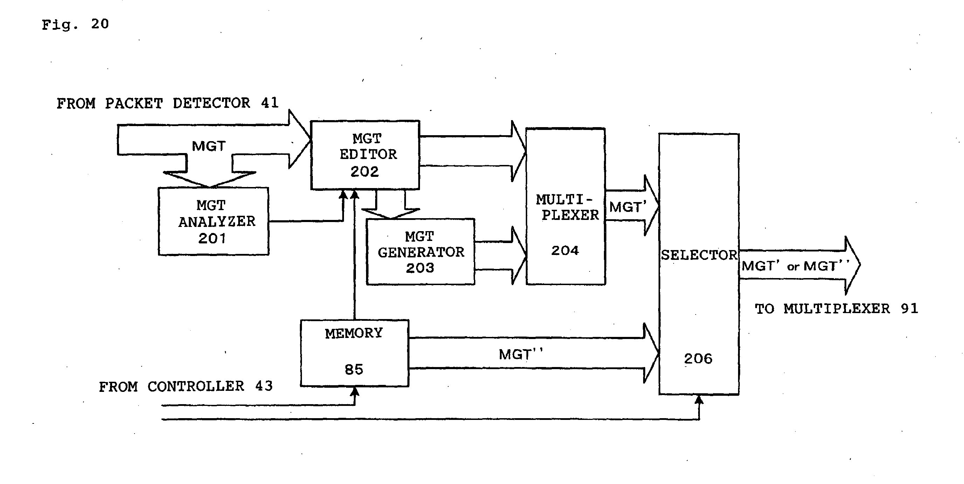

   Fig. 20 illustrates an MGT analyzer, an MGT editor, a CRC generator, a multiplexer, and a selector.
[Fig. 21]

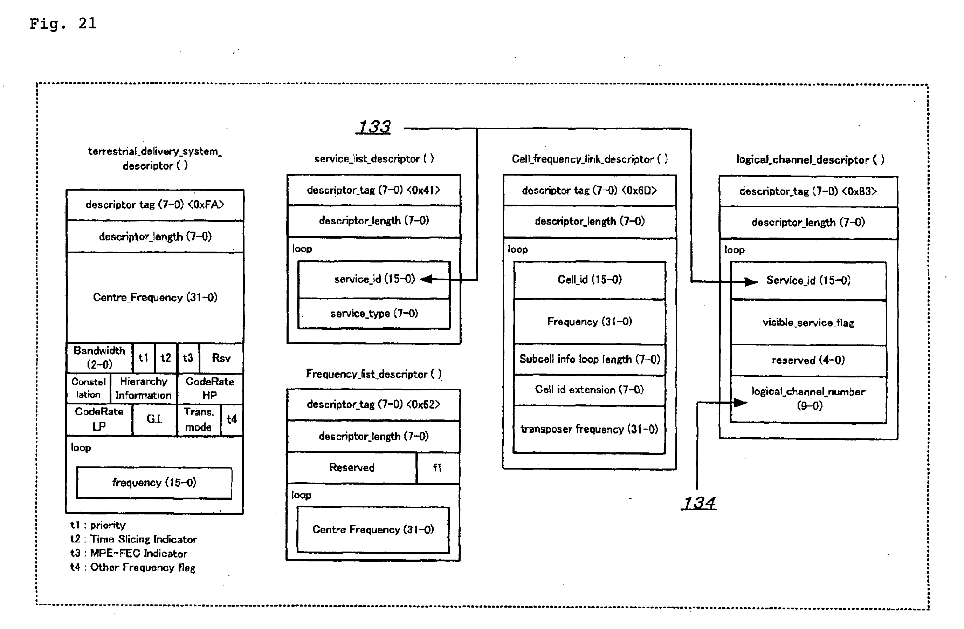

   Fig. 21 is a diagram for describing other exemplary detailed descriptions (for DVB-T) of a portion indicated by an arrow 132 in Fig. 13A.

### BEST MODE FOR CARRYING OUT THE INVENTION

Fig. 3 is a block diagram generally illustrating an apparatus for modifying part of a PSI packet in accordance with the present invention. Generally, the apparatus of the present invention comprises means (first means) 31 for receiving a TS to determine whether or not each TS packet is a PSI packet; means (second means) 32 for receiving the TS, and delaying the TS by a time required to determine whether or not each TS packet is a PSI packet; means (third means) 33 for modifying part of a packet which is a PSI packet; and means (fourth means) 34 for receiving a delayed TS and a modified PSI packet to selectively output the delayed TS and modified PSI packet. In addition, the output of the apparatus of the present invention is connected to the transmitter 21 shown in Fig. 2. Alternatively, the apparatus of the present invention can be provided within the transmitter 21.

Fig. 4 illustrates a detailed block diagram of the first means shown in Fig. 3. The first means 31 shown in Fig. 3 corresponds to a packet detector 41 and a controller 43 (preferably, and a timing generator 42). Fig. 10 is a diagram for describing exemplary descriptions of a TS packet. In this regard, the TS packet shown in Fig. 10 has a packet length of 188 bytes, but the TS packet length may be 204 bytes.

The packet detector 41 determines whether or not each TS packet is a PSI packet. Specifically, the packet detector 41 extracts a sync byte ("47" (0×47) in hexadecimal notation) (see an arrow 100 in Fig. 10) of each TS packet, extracts a packet ID (PID) (see an arrow 101 in Fig. 10) from the second to third bytes of each TS packet, and determines whether or not the PID of each TS packet is the PID of the PSI packet (PID of PAT packet, PID of PMT packet, and PID of NIT packet). For reference, the PID of the PAT packet is "0000" (0×0000) in hexadecimal notation, and the PID of the NIT packet is "0010" (O×0010) in hexadecimal notation. Also, the PID of the PMT packet is described in the PAT packet, and the PID of the NIT packet is also described in the PAT packet.

Fig. 11A is a diagram for describing exemplary details of the PAT packet.

First, the packet detector 41 shown in Fig. 4 determines whether or not the PID (see an arrow 101 in Fig. 10) of each TS packet is 0×0000, and sends a PAT packet having the PID "0×0000" to the PAT analyzer 61. The PAT analyzer 61 analyzes descriptions of the PAT packet to retrieve the PID of a PMT packet (see an arrow 110 in Fig. 11A). The packet detector 41 receives the PID of the PMT packet from the PAT analyzer 61, and stores the PID of the PMT packet. In this regard, the number of the PMT packets is at least one or more, and when there are a plurality of PID's of PMT packets, the packet detector 41 stores all these PID's.

Alternatively, the packet detector 41 may analyze the descriptions of the PAT packet, and retrieve the PID of the PMT packet.

After storing the PID of the PMT packet, the packet detector 41 determines whether or not the PID of each packet is pertinent to any of the PID of PAT packet (0×0000), PID of PMT packet (PID stored in the packet detector 41), and PID of NIT packet (0×0000). When the PID of the packet is not pertinent to any of the PID's of the PAT packet, PMT packet, and NIT packet, the packet detector 41 sends a signal indicative of a non-PSI packet to the controller 43. When the PID of the TS packet is pertinent to the PID of the PAT packet, the packet detector 41 sends the packet to a PAT analyzer 61 and a PAT editor 62, and also sends a signal indicative of a PAT packet to the controller 43. When the PID of the TS packet is pertinent to the PID of the PMT packet, the packet detector 41 sends the packet to a PMT analyzer 71 and a PMT editor 72, and also sends a signal indicative of a PMT packet to the controller 43. When the PID of the TS packet is pertinent to the PID of the NIT packet, the packet detector 41 sends the packet to an NIT analyzer 81 and an NIT editor 82, and also sends a signal indicative of a NIT packet to the controller 43.

The controller 43 sends a first control signal which indicates that a TS packet is any of a non-PSI packet, a PAT packet, a PMT packet, or an NIT packet to a multiplexer 91.

When the PAT analyzer 61 analyzes descriptions of a PAT packet to retrieve the PID of the PMT packet, the PAT analyzer 61 preferably determines whether or not descriptions related to an NIT packet (program_number "0×0000" (see an arrow 111 in Fig. 11A) and network_ID "0×0010" (see arrow 112 in Fig. 11A)) are described in the PAT packet.

The PAT analyzer 61 also sends the presence of absence of descriptions related to an NIT packet to the packet detector 41. When the packet detector 41 receives the signal which indicates that descriptions related to an NIT packet are not included in the PAT packet, the packet detector 41 determines that no NIT packet exists in an input TS.

Alternatively, the packet detector 41 may determine the presence or absence of descriptions related to an NIT packet.

Further alternatively, instead of the determination made by the PAT analyzer 61 or packet detector 41 as to the presence or absence of descriptions related to an NIT packet, the packet detector 41 may determine whether or not the PID of each TS packet is the PID of the NIT packet for a predetermined time period (for example, 20 seconds), and determine that no NIT packet exists in an input TS when the packet detector 41 does not detect any NIT packet for the predetermined time period.

Further, the first means 31 shown in Fig. 3 preferably comprises the timing generator 42 shown in Fig. 4. The timing generator 42 generates (or receives) a reference signal (for example, at 54 MHz), and generates a timing signal having a predetermined period (for example, ten seconds) which corresponds to a predetermined number of counted reference signals (for example, 540,000,000). The timing signal (NIT sending signal) is a signal for detecting the first Null packet which exists after the packet detector 41 has received the timing signal. Upon determining that no NIT packet exists in an input TS, the packet detector 41 detects a Null packet using the timing signal as a trigger. Specifically, the packet detector 41 determines whether or not the PID of each TS packet which makes up the TS is pertinent to the PID of the Null packet (0×1FFF) each time it receives the timing signal. When the PID of the TS packet is pertinent to the PID of the Null packet, the packet detector 41 sends a signal indicative of a Null packet applicable to a position at which an NIT packet should be inserted to the controller 43. In this regard, the packet detector 41 stops determining whether or not the PID of the TS packet is the PID of the Null packet or stops transmitting the signal indicative of a Null packet after the packet detector 41 detects the first Null packet which exists from the time it received the timing signal.

Upon receipt of the signal indicative of a Null packet applicable to a position at which an NIT packet should be inserted, the controller 43 sends a first control signal indicative of a Null packet applicable to a position at which an NIT packet should be inserted, to the multiplexer 91, instead of the first control signal indicative of an NIT packet. The controller 43 further sends a second control signal which indicates that a previously provided NIT packet should be sent to a memory 85, and sends a third control signal which indicates that a previously provided NIT packet should be selected to a selector 86.

Fig. 5 illustrates a detailed block diagram of the second means shown in Fig. 3. The second means 32 shown in Fig. 3 corresponds to a delay buffer 51 shown in Fig. 5.

The delay buffer 51 illustrated in Fig. 5 receives the same TS as a TS input to the packet detector 41. The delay buffer 51 delays the TS by a time required by the packet detector 41 to determine whether or not each TS packet is a PSI packet. In other words, the time required by the packet detector 41 to determine whether or not each TS packet is a PSI packet is a time required by the packet detector 41 to extract the PID of each TS packet, and specifically is a time corresponding to three bytes. The delay buffer 51 sends the delayed TS to the multiplexer 91.

Figs. 6 to 8 illustrate detailed block diagrams of portions of the third means shown in Fig. 3, respectively.
The third means 33 shown in Fig. 3 corresponds to the PAT analyzer 61, PAT editor 62, CRC generator 64, multiplexer 64, PMT analyzer 71, PMT editor 72, CRC generator 73, multiplexer 74, NIT analyzer 81, NIT editor 82, CRC generator 83, multiplexer 84, and memory 85 (preferably as well as the selector 86) shown in Figs. 6 to 8. Fig. 11B is a diagram for describing exemplary descriptions of a PAT packet which does not have descriptions related to an NIT packet.

As described above, upon receipt of a PAT packet from the packet detector 41, the PAT analyzer 61 shown in Fig. 6 analyzes descriptions of the PAT packet to acquire the PID of the PMT packet (see the arrow 110 in Figs. 11A and 11B), and determines whether or not descriptions related to an NIT packet (program_number "0×0000" (see the arrow 111 in Fig. 11A) and network_ID (0×0010) (see the arrow 112 in Fig. 11A) are described in the PAT packet. The PAT analyzer 61 sends the PID of the PMT packet (preferably, and the presence or absence of the descriptions related to the NIT packet) to the packet detector 41.

During an analysis made on the descriptions of the PAT packet, the PAT analyzer 61 further retrieves a section length of the PAT packet (see an arrow 113 in Figs. 11A and 11B), and sends it to the PAT editor 62. The PAT analyzer 61 also retrieve a position at which ServiceID is described (see an arrow 115 in Figs. 11A and 11B), and sends it to the PAT editor 62. Preferably, the PAT analyzer 62 sends the presence or absence of the descriptions related to the NIT packet to the PAT editor 62. Alternatively, the PAT analyzer 61 may retrieve a position at which TSID is described (see an arrow 114 in Figs. 11A and 11B) and send it to the PAT editor 62.

The PAT editor 62 shown in Fig. 6 receives the same packet as a PAT packet input to the PAT analyzer 61 from the packet detector 41. The PAT editor 62 also receives TSID and ServiceID for rewriting from the memory 85. The PAT editor 62 overwrites the TSID and ServiceID for rewriting at positions at which the TSID and ServiceID are described, respectively. In this regard, since the TSID is described at fourth and fifth bytes from the head of a section (tableID), the PAT editor 62 can find the TSID description position from the head of the section.

The PAT editor 62 further sends section data of the PAT packet (in which the TSID and ServiceID have been modified) based on the section length of the PAT packet to the CRC generator 63 and multiplexer 64. Upon receipt of the signal which indicates that the descriptions related to the NIT packet are not included in the PAT packet, the PAT editor 62 adds the descriptions related to the NIT packet, modifies the section length of the PAT packet, and sends the section data (in which the section length, TSID, and ServiceID have been modified, and the descriptions related to the NIT packet have been added) to the CRC generator 63 and multiplexer 64.

The CRC generator 63 generates a new CRC code based on the section data, and sends the new CRC code to the multiplexer 64. The multiplexer 64 multiplexes the section data and new CRC code, and sends the modified PAT packet to the multiplexer 91.

Fig. 12 is a diagram for describing exemplary descriptions of the PMT packet.

The PMT analyzer 71 shown in Fig. 7, upon receipt of a PMT packet from the packet detector 41, analyzes descriptions of the PMT packet, retrieves a section length of the PMT packet (see an arrow 120 in Fig. 12), and sends it to the PMT editor 72. The PMT analyzer 71 also retrieves a position at which ServiceID is described (see an arrow 121 in Fig. 12), and sends it to the PMT editor 72.

The PMT editor 72 receives the same packet as the PMT packet input to the PMT analyzer 71 from the packet detector 41. The PMT editor 72 also receives ServiceID for rewriting from the memory 85. The PMT editor 72 overwrites the ServiceID for rewriting at the position at which the ServiceID is described. The PMT editor 72 further sends section data of the PMT packet (in which the ServiceID has been modified) to the CRC generator 73 and multiplexer 74 based on the section length of the PMT packet.

The CRC generator 73 generates a new CRC code based on the section data, and sends the new CRC code to the multiplexer 74. The multiplexer 74 multiplexes the section data and new CRC code, and sends the modified PMT packet to the multiplexer 91.

Fig. 13A is a diagram for describing exemplary descriptions of an NIT packet, and Fig. 13B is a diagram for describing exemplary detailed descriptions of a portion indicated by an arrow 132 in Fig. 13A.

The NIT analyzer 81 shown in Fig. 8, upon receipt of an NIT packet from the packet detector 41, analyzes descriptions of the NIT packet, retrieves a section length of the NIT packet (see an arrow 130 in Fig. 13A), and sends it to the NIT editor 82. The NIT analyzer 81 also retrieves positions at which TSID, ServiceID, and RemoteControlKeyID are described (see an arrow 131 in Fig. 13A, an arrow 133 in Fig. 13B, and an arrow 134 in Fig. 13B), and sends them to the NIT editor 82.

The NIT editor 82 receives the same packets as the NIT packet input to the NIT analyzer 81 from the packet detector 41. The NIT editor 82 also receives TSID, ServiceID, and RemoteControlKeyID for rewriting from the memory 85. The NIT editor 82 overwrites the TSID, ServiceID, and RemoteControlKeyID for rewriting at the positions at which the TSID, ServiceID, and RemoteControlKeyID are described. The NIT editor 82 further sends section data of the NIT packet (in which TSID, ServiceID, and RemoteControlKeyID have been modified) to the CRC generator 83 and multiplexer 84 based on the section length of the NIT packet.

The CRC generator 83 generates a new CRC code based on the section data, and sends the new CRC code to the multiplexer 84. The multiplexer 84 multiplexes the section data and new CRC code, and sends the modified NIT packet to the multiplexer 91. The memory 85 stores at least one set of TSID, ServiceID, and RemoteControlLeyID.

Preferably, the memory 85 stores an NIT packet for rewriting (for example, NIT packet for the digital terrestrial broadcasting of Japan) as binary data, and the third means 33 shown in Fig. 3 also comprises the selector 86. When the memory 85 receives the second control signal from the controller 43 where the control signal indicates that a previously provided NIT packet should be sent, the memory 85 sends the NIT packet for rewriting to the selector 86.

The selector 86 receives a third control signal which indicates that the previously prepared NIT packet should be selected from the controller 43, and sends the NIT packet for rewriting to the multiplexer 91. When the selector 86 does not receive the third control signal from the controller 43, the selector 86 sends the modified NIT packet from the multiplexer 84 to the multiplexer 91.

In this regard, the memory 85 can store a plurality of sets of TSID's, ServiceID's, and RemoteControlKeyID's, and can send a set of TSID, ServiceID, and RemoteControlKeyID selected by the controller 43 or another controller (not shown) to the PAT editor 62, PMT editor 72, and NIT editor 82. The memory 85 can also store a plurality of NIT packets for rewriting, and can send one NIT packet selected by the controller 43 or another controller (not shown) to the selector 86.

Fig. 9 illustrates a detailed block diagram of the fourth means shown in Fig. 3. The fourth means 34 shown in Fig. 3 corresponds to the multiplexer 91 shown in Fig. 9.

The multiplexer 91 shown in Fig. 9 receives a delayed TS, a modified PAT packet, a modified PMT packet, a modified NIT packet, and the first control signal (which indicates any of a non-PSI packet, a PAT packet, a PMT packet, or an NIT packet). The multiplexer 91 switches the delayed TS, modified PAT packet, modified PMT packet, and modified NIT packet in accordance with the first control signal to output a modified TS.

Fig. 14 is a diagram for describing a TS in which part of a PSI packet has been modified by the apparatus of the present invention. As shown in Fig. 14, the first control signal indicates any of a non-PSI packet "00," a PAT packet "01," a PMT packet "03," or an NIT packet "02," and the multiplexer 91 selects a delayed TS (see an arrow 140 in Fig. 14), a modified PAT packet (see an arrow 141 in Fig. 14), a modified PMT packet (see an arrow 142 in Fig. 14), and a modified NIT packet (see an arrow 143 in Fig. 14) in accordance with the first control signal.

The multiplexer 91 shown in Fig. 9, upon receipt of the first control signal indicative of a Null packet applicable to a position at which an NIT packet should be inserted from the controller 43, input NIT for rewriting instead of a modified NIT packet. Fig. 15 is a diagram for describing a TS in which part of a PSI packet has been modified by the apparatus of the present invention. As shown in Fig. 15, the first control signal indicates any of a non-PSI packet "00," a PAT packet "01," a PMT packet "03," or a Null packet "02" applicable to the position at which an NIT packet should be inserted, and the multiplexer 91 selects the NIT packet for rewriting (see an arrow 150 in Fig. 15), by way of example, in accordance with the first control signal (for example, the Null packet "02" applicable to the position at which an NIT packet should be inserted).

### (Exemplary Modification 1)

As shown in Fig. 16, for example, the present invention can comprise first means 161 for receiving a TS, determining whether or not each TS packet is a PSI packet, and selectively outputting a non-PSI packet and a PSI packet; third means 33 for modifying part of the PSI packet; and fourth means 162 for receiving the non-PSI packet not modified and the modified PSI packet, and selectively outputting the non-PSI packet not modified and the modified PSI packet. As compared with the first means 31 shown in Fig. 3, the first means 161 shown in Fig. 16 sends a non-PSI packet (including a packet which is not a PAT packet, a PMT packet, or a NIT packet (or a Null packet applicable to a position at which an NIT packet should be inserted) to the fourth means 162 (corresponding to the multiplexer 91 in Fig. 9) without through a buffer (corresponding to the delay buffer 51 in Fig. 5).

### (Exemplary Modification 2)

Also, the present invention can output an NIT packet for rewriting as well instead of a partially modified NIT packet, after the NIT packet has been detected. In other words, the present invention can forcedly rewrite the NIT packet to the NIT packet for rewriting. Specifically, even when the PAT analyzer 61 sends the presence or absence of descriptions related to the NIT packet to the packet detector 41, and the packet detector 41 determines that an NIT packet exists in an input TS, the packet detector 41 can detect the NIT packet without detecting a Null packet. Further, even when the controller 43 receives a signal indicative of an NIT packet, the controller 43 can send the second control signal which indicates that a previously prepared NIT packet should be sent to the memory 85, and send the third control signal which indicates that the previously prepared NIT packet should be selected to the selector 86.

### (Exemplary Modification 3)

Further, the present invention can also output the NIT packet as it is. Specifically, the packet detector 41 determines whether or not each TS packet is a PSI packet except for an NIT packet. In other words, the packet detector 41 determines whether or not the PID of each TS packet is pertinent to the PID of the PAT packet (0×000) and the PID of the PMT packet (PID stored in the packet detector 41). When the PID of the packet is not pertinent to any of the PID's of PAT packet and PMT packet, the packet detector 41 sends a signal indicative of a non-PSI packet (packet not subjected to a modification) to the controller 43. The delay buffer 51 sends a delayed NIT packet to the multiplexer 91. Alternatively, the first means 161 shown in Fig. 16 sends the NIT packet to the fourth means 162 as a non-PSI packet (packet not subjected to a modification).

### (Exemplary Modification 4)

When a TS conforms to the digital terrestrial broadcasting scheme (ATSC) of the United States, a PSI packet does not include an NIT packet. A VCT packet corresponding to the NIT packet is included in a PSIP (Program System Information Protocol) packet. For reference, the PSIP packet includes, in addition to the VCT packet, an MGT (Master Guide Table) packet, an STT (System Time Table) packet, an RRT (Rating Region Table) packet, and the like, while the PSIP packet includes one table. While the VCT packet includes a CVCT (for CATV) packet and a TVCT (for TV broadcasting) packet, the two have substantially similar structures, so that the apparatus of the present invention can treat them as substantially the same thing.

The apparatus of the present invention which conforms to the digital terrestrial broadcasting scheme of the United States handles the VCT packet instead of the NIT packet. Accordingly, "NIT" in Figs. 4, 8, 9, 14 and 15 and in the foregoing description, for example, can be replaced by "VCT."

It should be noted that the PSI packet does not include the VCT packet, but the PSI packet in this specification, drawings and claims, the PSI packet can be regarded to include the VCT packet. Therefore, the "PSI" in Figs. 3 and 16 and in the foregoing description, for example, includes VCT.

In the foregoing description, when "NIT" is replaced by "VCT," the PID of the NIT packet ("0010" (0×0010) in hexadecimal notation) must be replaced by the PID of the VCT packet ("1FFB" (0×1FFB) in hexadecimal notation). In this regard, since the PID of the VCT packet is the same as the PID of the MGT, STT and RTT packets, the packet detector 41 must identify TableID in order to identify the VCT packet.

Specifically, for determining whether or not each TS packet is a PSI packet (PID of PAT packet, PID of PMT packet, and PID of VCT packet), when the PID of the TS packet is pertinent to the PID of the VCT packet, the packet detector 41 further extracts a pointer field from the fifth byte of the packet (see an arrow 102 in Fig. 10), finds a position at which the TableID is described from the pointer field, and extracts the TableID from the described position.
Subsequently, the packet detector 41 determines whether or not the extracted TableID is the TableID of the VCT packet ("C8" (0×C8:TVCT) of "C9" (0×C9:CVCT)). When the PID and TableID of the TS packet is pertinent to the PID and TableID of the VCT packet, the packet detector 41 sends the packet to the VCT analyzer (81) and VCT editor (82), and sends a signal indicative of a VCT packet to the controller 43.

For reference, the position at which the TableID is described is variable in the packet (for example, the TableID of VCT is described in the sixth to 141st bytes of the TS packet, whereas the TableID of MGT is described in the sixth to 161st bytes of the TS packet), so that in order to determine the type of each TS packet, the detector 41 finishes the determination as to whether each TS packet is, for example, a non-PSI packet, a PAT packet, a PMT packet, or a VCT packet (or a Null packet applicable to a position at which a VCT packet should be inserted) when the TableID of each TS packet is extracted, rather than when the PID of each TS packet is extracted. Also, with respect to the delay buffer 51, the time required by the packet detector 41 to determine whether or not each TS packet is a PSI packet is, specifically, a time corresponding to approximately the length of one packet (188 bytes).

Fig. 17A is a diagram for describing exemplary descriptions of the VCT packet, and Fig. 17B is a diagram for describing exemplary detailed descriptions of a portion indicated by an arrow 172 in Fig. 17A. The arrows 130, 131, 132, 133, and 134 in Figs. 13A and 13B correspond to arrows 170, 171, 172, 173, and 174 in Figs. 17A and 17B. For reference, the position at which the TableID ("C8" (0xC8: TVCT) or "C9" (0xC9: CVCT)) is described in the VCT packet corresponds to an arrow 175 in Fig. 17A.

When "NIT" is replaced by "VCT" in the foregoing description, the PAT analyzer 62 does not determine whether or not descriptions related to VCT are described in a PAT packet. This is because the PAT packet conforming to the digital terrestrial broadcasting scheme of the United States does not have descriptions related to VCT.

Also, when "NIT" is replaced by "VCT" in the foregoing description, the packet detector 41 determines whether or not the PID and TableID of each TS packet are the PID and TableID of the VCT packet for a first predetermined time period (for example, 0.8 seconds), and the packet detector 41 determines that no VCT packet exists in an input TS if it does not detect the VCT packet within the first predetermined time period. Also, the period of the timing signal (VCT sending signal) generated by the timing generator 42 is set, for example, to 0.4 seconds.

Alternatively, the packet detector 41 may determine whether or not the PID and TableID of each TS packet are the PID ("1FFB" (0x1FFB) in hexadecimal notation) and TableID ("C7" (0xC7) in hexadecimal notation) of MGT packet for a second predetermined time period (for example, 0.3 seconds), and the packet detector 41 may determine that no MGT packet exists in an input TS if it does not detect the MGT packet within the second predetermined time period.

Preferably, the timing generator 42 also generate a second timing signal (MGT sending signal) having a second period (for example, 0.15 seconds), and the memory 85 also stores an MGT packet for rewriting. When the packet detector 41 determines that no MGT packet exists in an input TS, the packet detector 41 detects a second Null packet applicable to a position at which the MGT packet should be inserted each time it receives the second timing signal, and sends a signal which indicates that a second Null packet is detected to the controller 43. The controller 43 sends a first control signal indicative of the second Null packet applicable of the position at which the MGT packet should be inserted to the multiplexer 91, sends a second control signal to the memory 85 where the second control signal indicates that a previously provided MTG packet should be sent, and sends a third control signal which indicates that a previously prepared MGT packet should be selected to the selector (206).

Further preferably, the packet detector 41 determines the presence or absence of the VCT packet or MGT packet in the following manner. The packet detector 41 determines whether or not the PID of each TS packet is the PID ("1FFB" (0×1FFB) in hexadecimal notation) of VCT packet and MGT packet for a third predetermined time period (for example, one second), and the packet detector 41 determines that neither the VCT packet nor the MGT packet exist when it does not detect the PID of the VCT packet and MGT packet (PID of PSIP packet) for the third predetermined time period. On the other hand, when the packet detector 41 detects the PID of the VCT packet and MGT packet (PID of PSIP packet), the packet detector 41 determines that the MGT packet exists. Further, when the packet detector 41 detects the PID of the VCT packet and MGT packet (PID of PSIP packet), the packet detector 41 further determines whether or not the TableID of each TS packet is the TableID of VCT packet, and determines that the VCT packet exists when it detects the TableID of the VCT packet.

When both the VCT packet and MGT packet exist, the apparatus of the present invention modifies part of the VCT packet, or replaces the VCT packet with a VCT packet for rewriting. When both the VCT packet and MGT packet exist, the apparatus of the present invention may replace the MGT packet with an MGT packet for rewriting. Also, when neither the VCT packet nor MGT packet exist, the apparatus of the present invention replaces both the VCT packet and MGT packet with a VCT packet and an MGT packet for rewriting. Further, when the MGT packet exists but the VCT packet does not exist, the apparatus of the present invention replaces the VCT packet with a VCT packet for rewriting, and adds descriptions related to the VCT packet (table_type "0×0000" (TVCT) or "0×0002" (CVCT) (see an arrow 180 in Fig. 18) and table_type_PID "0×1FFB" (see an arrow 181 in Fig. 18)) to the MGT packet.
When the MGT packet exists but the VCT packet does not exist, the apparatus of the present invention may replace the MGT packet with an MGT packet for rewriting.

The apparatus of the present invention comprises an MGT analyzer (201), an MGT editor (202), a CRC generator (203), a multiplexer (204), and a selector (206) for adding the descriptions related to the VCT packet to the MGT packet.
Also, for determining whether or not the MGT packet has descriptions related to the VCT packet, the packet detector 41 may make this determination, or the MGT analyzer (201) may make this determination.

Fig. 18 is a diagram for describing exemplary descriptions of the MGT packet, where descriptions related to VCT exist at arrows 180 and 181 in Fig. 18. Fig. 19 is a diagram illustrating the flow of an MGT packet, added to Fig. 4, and Fig. 20 illustrates an MGT analyzer, an MGT editor, a CRC generator, a multiplexer, and a selector.

### (Exemplary Modification 5)

The present invention can also conform to the digital terrestrial broadcasting schemes of Japan and the United States. For example, when the digital terrestrial broadcasting scheme of Japan is set by user setting, the present invention processes TS's in accordance with the digital terrestrial broadcasting scheme of Japan, whereas when the digital terrestrial broadcasting scheme of the United States is set, the present invention processes TS's in accordance with the digital terrestrial broadcasting scheme of the United States. Alternatively, the present invention can automatically determines the digital terrestrial broadcasting schemes of Japan and the United States as well.

Specifically, the detector 41 can determine whether or not each TS packet includes an NIT packet conforming to the digital terrestrial broadcasting scheme of Japan or a VCT packet conforming to the digital terrestrial broadcasting scheme of the United States. The memory 85 in turn stores at least one set of TSID, ServiceID, RemoteControlKeyID, and MajorChannelNumber. The memory 85 can store an NIT packet, a VCT packet and an MGT packet for rewriting as well. The delay buffer 51 can change a time by which a TS is delayed in accordance with a determined digital terrestrial broadcasting scheme, or alternatively can change the time by which a TS is delayed by a time corresponding to the length of one packet, independently of the digital terrestrial broadcasting scheme. The apparatus of the present invention comprises a VCT analyzer, a VCT editor, a CRC generator for VCT, a multiplexer, and a selector, in addition to the NIT analyzer 81, NIT editor 82, CRC generator 83, multiplexer 84, and selector 86. The apparatus of the present invention can further comprise an MGT analyzer 201, an MGT editor 202, a CRC generator 203, a multiplexer 204, and a selector 206.

### (Exemplary Modification 6)

When a TS conforms to the digital terrestrial broadcasting scheme (DVB-T) of the Europe, the structure of a PSI packet for DVB-T is basically similar to the structure of the PSI packet for ISDB.

However, detailed descriptions within the structure of the PSI packet for DVB-T are different from detailed descriptions within the structure of the PSI packet for ISDB. Also, the detailed descriptions within the structure of an NIT packet included in the PSI packet employ LogicalChannelNumber (which is employed in England, Austria and the like) instead of RemoteControlKeyID described in the NIT packet for ISDB. Stated another way, when a TS conforms to the digital terrestrial broadcasting scheme (DVB-T) of the Europe, detailed descriptions indicated by the arrow 132 in Fig. 13A, within the structure of the NIT packet shown in Fig. 13A, are replaced with descriptions shown in Fig. 21.

Accordingly, the operation of the apparatus of the present invention conforming to the digital terrestrial broadcasting scheme of the Europe is basically similar to the operation of the apparatus of the present invention conforming to the digital terrestrial broadcasting scheme of Japan except that LogicalChannelNumber (see 134 in Fig. 21) (which is employed in England, Austria and the like), for example, is handled instead of RemoteControlKeyID (see 134 in Fig. 13B).

### (Exemplary Modification 7)

The present invention can also conform to digital terrestrial broadcasting schemes other than those of Japan and the United States.

It should be understood that the present invention is not limited to the illustrative embodiment described above, and those skilled in the art can readily modify the illustrative embodiment and exemplary modifications described above without departing from the claims.

## Claims

1. An apparatus comprising:
means (31) for receiving a TS (transport stream) and determining whether or not each TS packet is a predetermined packet;
means (32) for delaying the TS;
means (33) for modifying part of the predetermined packet; and
means (34) for selectively outputting the delayed TS packet and the modified predetermined packet.

2. An apparatus according to claim 1, wherein:
said third means (33) overwrites an ID or a similar item (for example, Number) described in the predetermined packet on a predetermined ID or a similar item (for example, Number).

3. An apparatus according to claim 1, wherein said predetermined packet includes a PAT packet, a PMT packet, and an NIT packet (or one similar to the NIT packet (for example, a VCT packet)).

4. An apparatus according to claim 1, wherein said predetermined packet includes a PAT packet, a PMT packet, and a Null packet applicable to a position at which an NIT packet (or one similar to the NIT packet (for example, a VCT packet)) should be inserted.

5. An apparatus according to claim 1, wherein said predetermined packet includes a PAT packet and a PMT packet, and does not include an NIT packet (or one similar to the NIT packet (for example, a VCT packet)).

6. An apparatus according to claim 1, further comprising:
means (61, 41) for analyzing descriptions of a PAT packet,
wherein said predetermined packet includes the PAT packet,
said first means (31) determines whether or not a PID of each TS packet is a PID of the PAT packet, and
said means (61, 41) for analyzing descriptions of a PAT packet analyzes the descriptions of the PAT packet to retrieve the PID of a PMT packet.

7. An apparatus according to claim 6, wherein:
said predetermined packet further includes a PMT packet, and
said first means (31) determines whether or not the PID of each TS packet is a PID of the PMT packet.

8. An apparatus according to claim 1, further comprising:
means (61, 41) for analyzing descriptions of a PAT packet, wherein:
said predetermined packet includes the PAT packet,
said first means (31) determines whether or not the PID of each TS packet is a PID of the PAT packet, and
said means (61, 41) for analyzing descriptions of a PAT packet analyzes the descriptions of the PAT packet to determine whether or not there are descriptions related to an NIT packet.

9. An apparatus according to claim 1, wherein:
said predetermined packet includes an NIT packet, and
said first means (31) determines whether or not the PID of each TS packet is a PID of the NIT packet for a predetermined time period.

10. An apparatus according to claim 1, wherein:
said predetermined packet includes a NULL packet when there is no NIT packet, and said first means (31) determines whether or not the PID of each TS packet is a PID of the NULL packet.

11. An apparatus according to claim 1, further comprising:
means (201, 41) for analyzing descriptions of an MGT packet, wherein:
said predetermined packet includes the MGT packet,
said first means (31) determines whether or not the PID of each TS packet is a PID of the MGT packet, and
said means (201, 41) for analyzing descriptions of an MGT packet analyzes the descriptions of the MGT packet to determine whether or not there are descriptions related to a VCT packet.

12. An apparatus according to claim 1, wherein:
said predetermined packet includes a VCT packet, and
said first means (31) determines whether or not the PID of each TS packet is a PID of the VCT packet for a predetermined time period.

13. An apparatus according to claim 1, wherein:
said predetermined packet includes a NULL packet when there is no VCT packet, and said first means (31) determines whether or not the PID of each TS packet is a PID of the NULL packet.

14. An apparatus according to claim 1, further comprising:
means (85) for storing RemoteControlKeyID for rewriting or a similar item (for example, MajorChannelNumber, LogicalChannelNumber), wherein:
said first means (33) overwrites RemoteControlKeyID or a similar item (for example, MajorChannelNumber) described in the predetermined packet on the stored RemoteControlKeyID for rewriting or similar item (for example, MajorChannelNumber, LogicalChannelNumber).

15. An apparatus according to claim 1, further comprising:
means (85) for storing TSID, ServiceID, and RemoteControlKeyID for rewriting (or one similar to RemoteControlKeyID (for example, MajorChannelNumber, LogicalChannelNumber)), wherein:
said third means (33) overwrites TSID, ServiceID, and RemoteControlKeyID (or one similar to RemoteControlKeyID (for example, MajorChannelNumber, LogicalChannelNumber)) described in the predetermined packet on the stored TSID, ServiceID, and RemoteControlKeyID (or one similar to RemoteControlKeyID (for example, MajorChannelNumber, LogicalChannelNumber)) for rewriting.

16. An apparatus according to claim 1, further comprising:
means (85) for storing an NIT packet for rewriting, wherein:
said predetermined packet includes a PAT packet, a PMT packet, and a Null packet applicable to a position at which the NIT packet is inserted,
said first means (31) determines whether or not each TS packet is pertinent to one of the PAT packet, PMT packet, and Null packet applicable to a position at which the NIT packet is inserted, and
when said first means (31) determines that each TS packet is pertinent to the Null packet applicable to a position at which a NIT packet is inserted, said fourth means (34) outputs the stored NIT packet for rewriting as a modified predetermined packet.

17. An apparatus according to claim 1, further comprising:
means (85) for storing a VCT packet for rewriting, wherein:
said predetermined packet includes a PAT packet, a PMT packet, and a Null packet applicable to a position at which a VCT packet should be inserted,
said first means (31) determines whether or not each TS packet is pertinent to one of the PAT packet, PMT packet, and Null packet applicable to a position at which a VCT packet should be inserted, and
when said first means (31) determines that each TS packet is pertinent to the Null packet applicable to a position at which a VCT packet should be inserted, said fourth means (34) outputs the stored VCT packet for rewriting as a modified predetermined packet.

18. An apparatus according to claim 1, wherein:
said storing means (85) further stores an MGT packet for rewriting,
said predetermined packet further includes a Null packet applicable to a position at which a MGT packet should be inserted,
said first means (31) determines whether or not each TS packet is pertinent to one of the PAT packet, PMT packet, null packet applicable to a position at which a VCT packet should be inserted, and Null packet applicable to a position at which a MGT packet should be inserted, and
when said first means (31) determines that each TS packet is pertinent to the null packet applicable to a position at which a VCT packet should be inserted, said fourth means (34) outputs the stored MGT packet for rewriting as a modified predetermined packet.

19. An apparatus according to claim 3, further comprising:
means (85) for storing an NIT packet (or one similar to the NIT packet (for example, a VCT packet) for rewriting, wherein:
said first means (31) determines whether or not each TS packet is pertinent to one of the PAT packet, PMT packet, and NIT packet (or one similar to the NIT packet (for example, the VCT packet), and
when said first means (31) determines that each TS packet is pertinent to the NIT packet (or the one similar to the NIT packet (for example, the VCT packet), said fourth means (34) outputs the stored NIT packet (or the one similar to the NIT packet (for example, the VCT packet) as a modified predetermined packet.

20. An apparatus according to claim 5, wherein:
said first means (31) determines whether or not each TS packet is pertinent to one of the PAT packet and PMT packet,
a predetermined packet selectively output by said fourth means (34) includes a modified PAT packet and PAT packet from said third means (33), and
a TS selectively output by said fourth means (34) includes a delayed NIT packet (or one similar to the NIT packet (for example, the VCT packet) from said second means (32).

21. An apparatus according to claim 10, further comprising:
means (42) for generating a timing signal for sending the NIT packet; and
means (85) for storing an NIT packet for rewriting,
wherein:
said first means (31) detects a NULL packet using the timing signal as a trigger, and
said fourth means (34) outputs the stored NIT packet for rewriting as a modified predetermined packet.

22. An apparatus according to claim 13, further comprising:
means (42) for generating a timing signal for sending the VCT packet; and
means (85) for storing a VCT packet for rewriting,
wherein:
said first means (31) detects a NULL packet using the timing signal as a trigger, and
said fourth means (34) outputs the stored VCT packet for rewriting as a modified predetermined packet.

23. An apparatus according to claim 22, further comprising:
means (42) for generating a second timing signal for sending the MGT packet, wherein:
said storing means (85) further stores an MGT packet for rewriting,
said first means (31) detects a second NULL packet using the second timing signal as a trigger, and
said fourth means (34) outputs the stored MGT packet for rewriting as a modified predetermined packet.

24. An apparatus comprising:
means (151) for receiving a TS and determining whether or not each TS packet is a predetermined packet;
means (33) for modifying part of the predetermined packet; and
means (152) for selectively outputting a non-predetermined packet which is not modified and the modified predetermined packet.
